# EUROPEAN PATENT SPECIFICATION

(11) **EP 3 231 151 B1**
(45) Date of publication and mention of the grant of the patent: **26.02.2020**
(21) Application number: 15801834.1
(22) Date of filing: 30.11.2015
(51) Int. Cl.: H04L 29/06, H04L 12/18

(54) **COMMISSIONING OF DEVICES IN A NETWORK**
INBETRIEBNAHME VON VORRICHTUNGEN IN EINEM NETZWERK
MISE EN SERVICE DE DISPOSITIFS DANS UN RÉSEAU

(30) Priority: 08.12.2014 EP 14196709
(43) Date of publication of application: 18.10.2017
(73) Proprietor: Koninklijke Philips N.V., 5656 AE Eindhoven (NL)
(72) Inventor: GARCIA MORCHON, Oscar, 5656 AE Eindhoven (NL); SHARMA, Sahil, 5656 AE Eindhoven (NL); RIETMAN, Ronald, 5656 AE Eindhoven (NL); TOLHUIZEN, Ludovicus, Marinus, Gerardus, Maria, 5656 AE Eindhoven (NL)
(86) International application number: PCT/EP2015/078010
(87) International publication number: WO 2016/091630

(56) References cited:
- US-A1- 2009 086 973
- US-A1- 2013 036 305
- US-B1- 7 360 084
- US-B1- 8 051 489

## Description

### FIELD OF THE INVENTION

The invention relates to secure network access. More particularly, the invention relates to method and apparatus for commissioning a joining node in a mesh network comprising a relay node and a border router node, wherein the border router node is connected to a wide area network including a server.

### BACKGROUND OF THE INVENTION

In Internet of Things, devices may be connected to a wide area network, such as the Internet. Such a wide area network can for instance be realized by means of a mobile carrier network such as GPRS or UMTS, or any high speed backhaul link. Further, devices may be connected with each other, collectively forming a mesh network in which several devices serve to forward messages that are sent from a first device to a second device. An example of such a mesh network technology is 6LoWPAN. 6LoWPAN is an adaptation layer that allows using IPv6 over 802.15.4 networks (which are examples of mesh networks).

For example, a subset of the devices has a wide area connection, and serve as a gateway to allow other devices in the mesh network to use their wide area connection. Such devices are called border routers. The border router acts as the gateway between the mesh network and, for example, a server which is connected to the border router over the cellular (GPRS), or wide area, network.

The mesh network can be protected at the network layer by a network key, also known as the L2 Key. The IEEE 802.15.4 standard outlines the security mechanisms and properties offered by different modes of operation. For example, the AES block cipher is used in CCM (AES-CCM, Authenticated Encryption with Associated Data (AEAD)) mode and an L2 key is used by the cipher to provide authentication and/or encryption. As is typically the case, a network wide L2 key is shared by the nodes within a particular area, wherein an area may span multiple meshes.

WO 2009/090616 A2 discloses a wireless system and method to control the cryptographic keying material that has been compromised in the network, exclude captured nodes from the network, and update compromised keying material in uncompromised devices US2013036305 discloses a mesh network connected via a router to a WAN, wherein a router provides WAN connectivity and authenticates devices joining the mesh network, assisted by an authentication server connected to the WAN.

### SUMMARY OF THE INVENTION

The invention relates to a router node, a joining node and a relay node as defined in independent claims 1, 3 and 5, corresponding methods as defined in independent claims 10-12 and a corresponding computer program product as defined in independent claim 13.

Further embodiments of the invention are defined in dependent claims 2 and 4.

### BRIEF DESCRIPTION OF THE DRAWINGS

These and other aspects of the invention are apparent from and will be elucidated with reference to the embodiments described hereinafter.
Fig. 1 is a block diagram of a mesh network and a server.
Fig. 2 is a block diagram of a border router node.
Fig. 3 is a block diagram of a joining node.
Fig. 4 is a block diagram of a relay node.
Fig. 5 is a flowchart of a method of a router node for routing commissioning requests.
Fig. 6 is a flowchart of a method of a joining node attempting to join a mesh network.
Fig. 7 is a flowchart of a method of a relay node for forwarding commissioning requests.
Fig. 8 is a block diagram of a number of example nodes in a mesh network.
Fig. 9 is a block diagram of a first example of a node in a mesh network.
Fig. 10 is a block diagram of a second example of a node in a mesh network.
Fig. 11 is a block diagram of a third example of a node in a mesh network.
Fig. 12 is a flowchart of a method for secure exchange of messages in a mesh network.

### DETAILED DESCRIPTION OF EMBODIMENTS

In the following, embodiments will be described in greater detail. However, the details provided herein are only intended as examples used to illustrate the invention. These details are not intended to limit the invention. Variations and additions to the disclosure may be made by the skilled person in view of the present disclosure.

A mesh network can comprise a small or a large number of nodes. The nodes can communicate messages with each other by means of the mesh network. Several (or all) nodes in the network can act as relay nodes which can forward messages from a first node to a second node, so that messages can travel along the network from their originating node towards their destination node. To this end, an addressing mechanism may be employed in the mesh network. Further, router nodes may exist on the network to route messages that are underway through the mesh network. One or more border router nodes may exist in the mesh network. The role of the border router node is to connect the mesh network to a wide area network. This may be done through a mobile data network (such as GPRS, UMTS, LTE), a Wi-Fi connection, or a cable connection to a wide area network. The wide area network may be, for example, the Internet. A device that wants to join the mesh network as a network node is referred to in this disclosure as a joining node. Generally, the first point of contact for a joining node may be a relay node of the mesh network. Thereafter, authentication, handshake, and/or commissioning messages transmitted by the joining node are forwarded by the relay node to the border router node. On its way to the border router node, the messages may possibly travel through other nodes in the mesh (also called routing nodes) until the message reaches the border router (BR).

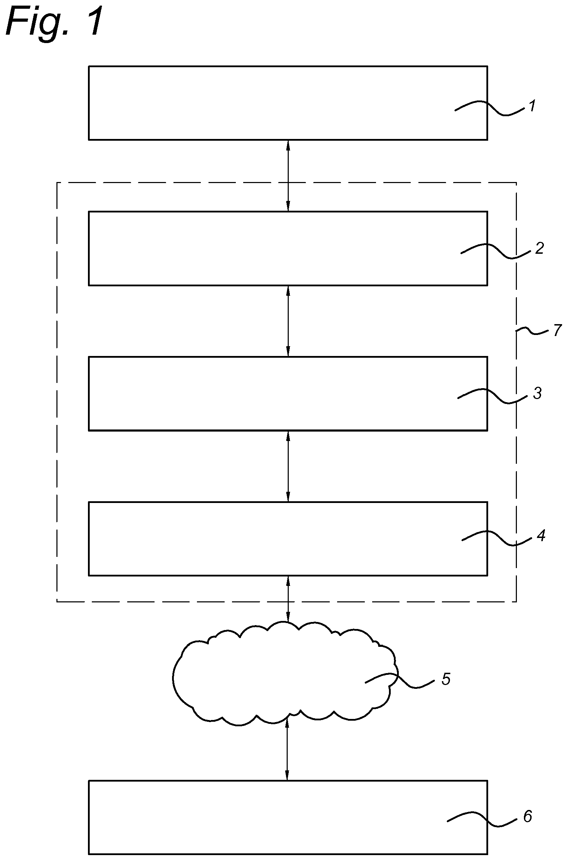

Fig. 1 illustrates a mesh network 7. Only one relay node 2, router node 3, and border router node 4 have been drawn. However, a plurality of each type of node can be present in the mesh network 7. Moreover, not all of these types of nodes have to be present in the network. For example, either one of the relay node 2 or router node 3 or both can be present in a network. The border router node 4 connects the mesh network 7 to the wide area network 5. Other nodes, for example nodes that do not forward any messages, or nodes that can only communicate with relay nodes and/or router nodes, can exist in the network. Those nodes are not shown in the drawing. The joining node 1 is a node that is not yet part of the mesh network, but it can send messages to a node of the mesh network to request to become a part of the mesh network. The process of allowing a joining node into the network is also sometimes referred to as commissioning. Messages involved in the authorization process of a joining node may be called commissioning messages. It is possible that the access to the mesh network 7 is controlled by a server 6 that is not by itself part of the mesh network 7. This server 6 may be connected to the mesh network 7 by means of a wide area network 5, for example a wireless mobile data network or a wired or wireless Internet connection.

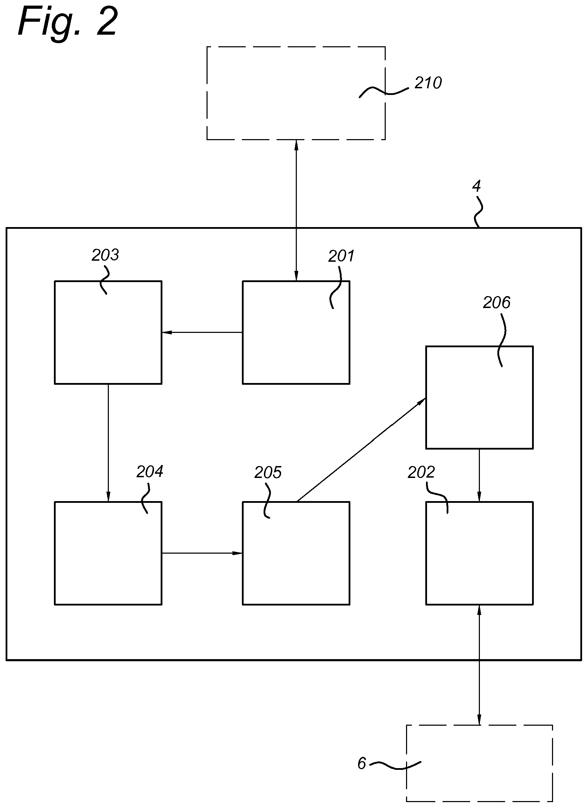

Fig. 2 illustrates an apparatus of a border router node 4. The border router node 4 is connected to the other nodes on the mesh network 210 by means of a mesh network unit 201 for connecting the router node to the mesh network. For example, the mesh network unit 201 comprises a radio that can send wireless signals to other nodes in the mesh network 210. Such other nodes may include a relay node 2 or a router node 3, for example.

The border router node 4 may further comprise a wide area network unit 202 for connecting the router node to the wide area network. The wide area network unit 202 may comprise a mobile network transceiver, and a SIM card reading unit, for example. The wide area network provides a connection to the server 6 that controls grant of commissioning requests to join the mesh network.

The border router node 4 may further comprise a receiving unit operatively coupled to the mesh network unit 201 for receiving one or more messages that were generated and first transmitted by a joining node 1 and forwarded by a relay node 2 and/or a router node 3 to reach the border router node 4. These received messages may include a handshake signal for requesting to join the mesh network, an authentication token, and an identity of the joining node. Some or all of these data may be encrypted by means of an identity-based pair-wise key set up between the identity of the joining node 1 and the identity of the border router node 4.

The border router node 4 may comprise a key generating unit 204 for generating a pair-wise identity-based key between the joining node 1 and the border router node 4 based on the identity of the joining node and an identity of the router node. For example, the border router node 4 has stored in a memory a node-specific pre-shared identity-based key material that can be combined with the identity of the joining node to generate this key.

The border router node 4 may comprise a checking unit 205 configured to check whether the received authentication token is valid based on at least the pair-wise identity-based key. For example, a signature of the authentication token may be validated to determine that the authentication token belongs to that identity. Further, the contents of the authentication token may be evaluated to check whether the joining node as proper credentials to be allowed a request to join the network. In a specific example, the checking unit 205 is configured to compare information authenticated with the authentication token to entries in a blacklist and/or entries in a whitelist to determine whether the authentication token is valid.

Further, the border router node 4 may comprise a forwarding unit 206 for forwarding the handshake signal to the server over the wide area network. The checking unit 205 may be operatively coupled to the forwarding unit 206 such that the forwarding unit 206 forwards the handshake signal only if the authentication token is determined to be valid.

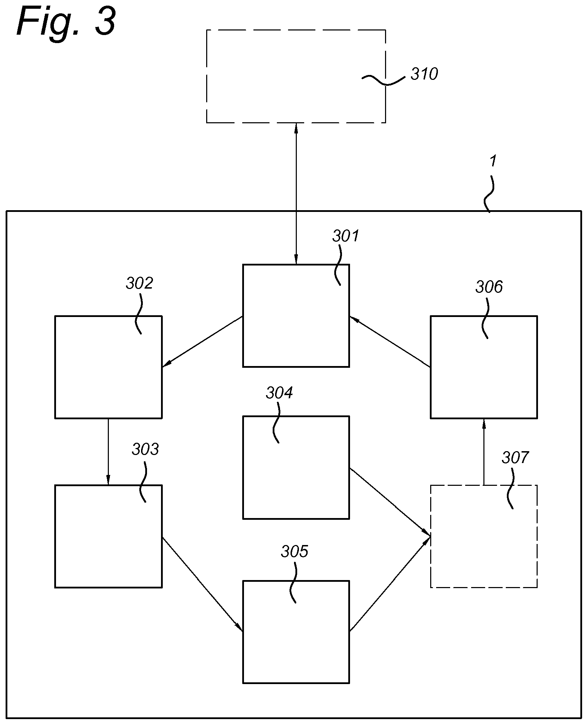

Fig. 3 illustrates an apparatus of a joining node 1. For example, this apparatus can be a network device. The apparatus 1 has a mesh network unit 301 to connect to devices in the mesh network 310. The apparatus comprises means to commission the joining node into the mesh network, so that the joining node becomes a node of the mesh network. The mesh network is organized in such a way that the commissioning messages are forwarded through a border router node 4 to the authenticating server 6. Moreover, the joining node 1 may not have a direct connection with the border router node 4. This connection may be through one or more relay nodes 2 and/or router nodes 3, which forward messages through the mesh network towards the border router node 4 or towards the joining node 1, according to the destination of the messages.

The mesh network unit 301 may be configured to perform a discovery procedure to find a relay node 2 or router node 3 in its direct environment, i.e. a node with which the joining node 1 can communicate without requiring forwarding of the message by another node. The found node is referred to hereinafter as relay node for simplicity, however it could also be a router node. The mesh network unit 301 may further be configured to send a commissioning request to the found relay node 2.

The apparatus of the joining node may comprise a receiving unit 302 for receiving an identity of the router node, from the relay node. For example, this router node of which the identity is received could be a border router node 4, because this is the node that functions as an interface from the mesh network to a (potentially more expensive and technically complex) wide area network. Alternatively, it could be another router node 3 in the mesh network. In the following, we will assume that the identity of the border router node was received, in the understanding that it could alternatively be another router node.

Further, the joining node 1 may comprise a key generating unit 303 for generating a pair-wise identity-based key between the joining node 1 and the border router node 4 based on an identity of the joining node and the identity of the router node. To this end, the apparatus of the joining node 1 may have stored in its memory pre-shared identity-based key material relating to the identity of the joining node.

Further, the joining node 1 may comprise a handshake unit 304 for generating a handshake signal for requesting permission to join the mesh network from the server. This handshake signal is intended to be received by the server 6, and may be generated by the handshake unit 304 according to a commissioning protocol, which is known in the art per se, for example the DTLS protocol.

Further, the joining node 1 may comprise an authentication token unit 305 for calculating an authentication token based on authentication data of the joining node and the pair-wise identity-based key between the joining node and the border router node. This authentication token can comprise a proof of a credential of the joining node. By basing the authentication token on the pair-wise identity-based key, the border router node can verify that the authentication token is issued by the joining node with a particular identity. For example, the authentication token may be encrypted based on the pair-wise identity-based key between the joining node and the border router node.

Further, the joining node 1 may comprise a sending unit 306 for sending the handshake signal and the (encrypted) authentication token to the relay node 2. The relay node may then forward the message to the border router node 4.

In a particular implementation, the key generating unit 303 is configured to further generate a pair-wise identity-based key between the joining node 1 and the relay node 2, based on the identity of the joining node and an identity of the relay node. For example, pre-shared key material associated with the identity of the joining node and stored in a memory of the joining node is used to this end.

The joining node 1 may further comprise a signing unit 307 for signing the handshake signal and/or the authentication token based on the pair-wise identity-based key between the joining node and the relay node. The sending unit 306 may then be configured to send the handshake signal and the encrypted authentication token as signed by the signing unit to the relay node 2. For example, the encrypted authentication token is encrypted by the authentication token unit 305 using the pair-wise identity-based key between the joining node and the border router node. After that, the signing unit 307 signs the encrypted authentication token (and/or the handshake signal) using the pair-wise identity-based key between the joining node and the relay node. This allows the relay node to perform a first check of the identity of the joining node, before forwarding the message to the border router node.

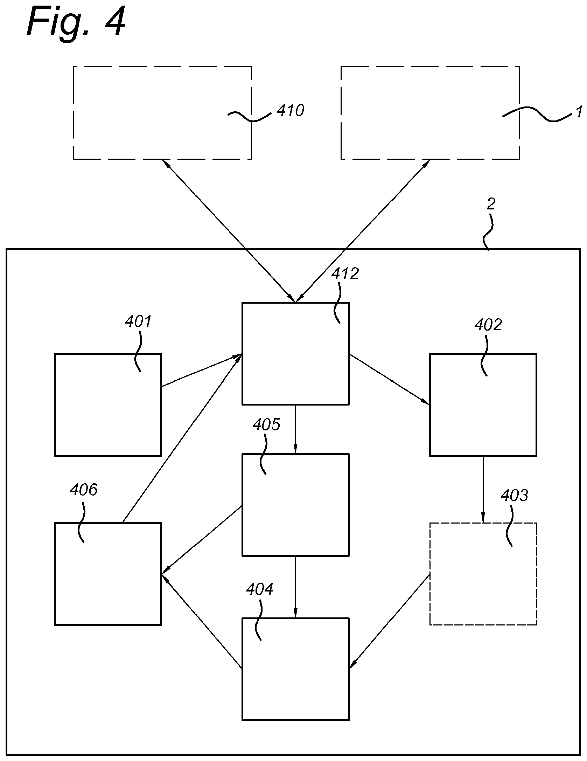

Fig. 4 illustrates an example of an apparatus implementing a relay node 2. The relay node 2 is a node in the mesh network that performs the function of forwarding messages between different nodes of the mesh network. However, the relay node 2 may have many other functions in addition hereto, which are not described in this document.

In the following, the functionality of the relay node 2 for commissioning a joining node 1 into the mesh network is described. The mesh network further comprises a border router node 4 that connects the mesh network to a wide area network including the server 6 that controls grant of commissioning requests to join the mesh network.

As illustrated in Fig. 4, the relay node 2 has a mesh network unit 412 to communicate with devices in the mesh network 410. The mesh network unit 412 is also configured to communicate with devices that are not yet part of the mesh network, but that want to join the mesh network. Such a device is indicated as joining node 1 in the drawing.

The mesh network unit 412 may be configured to discover a joining node 1 or to receive a request to join the network from such a joining node 1. Further, the relay node 2 may comprise a sending unit 401 for sending an identity of the border router node 4 and optionally an identity of the relay node 2 itself to the joining node in response to discovering a joining node 1 or receiving a request to join the network.

Further, the relay node 2 may comprise a handshake receiving unit 405 for receiving a handshake signal from the joining node 1, for requesting permission for the joining node 1 to join the mesh network 410. The handshake receiving unit 405 may further be configured to receive an authentication token from the joining node 1.

Further, the relay node 2 may comprise a forwarding unit 406 for forwarding the handshake signal and the authentication token to the router node 4.

In the following, an embodiment having more features is described. In this embodiment, the relay node 2 may further comprise an identity receiving unit 402 for receiving an identity of the joining node 1 from the joining node 1. The relay node 2 may further comprise a key generating unit 403 for generating a pair-wise identity-based key between the joining node and the relay node, based on the identity of the joining node and the identity of the relay node. For example, pre-distributed identity-based key material stored in a memory of the relay node may be used by this key generating unit 403. Further, the relay node 2 may comprise a verifying unit 404 for verifying whether the handshake signal and the authentication token are signed based on the pair-wise identity-based key between the joining node and the relay node. The forwarding unit 406 may be configured to forward the handshake signal and the authentication token to the router node based on an output of the verifying unit 404. For example, only requests from nodes having an identity that is not on a blacklist are forwarded. For example, if a joining node 1 is refused access by the server 6, the identity of that node may be put on a blacklist of the relay 2, so that the joining node 1 cannot try to request access to the mesh network again through that particular relay node 2.

The following features may be applied to each of the above-described nodes. For example, the authentication token can be indicative of a proof of an identity of the joining node 1. The features described in respect of the border router 4 node can be applied to other router nodes 3 in the mesh network as well. The handshake signal can comprise a datagram transport layer security, DTLS, handshake signal. The key generating units 204, 303, 403 can be configured to generate the pair-wise identity-based keys based on identity-based pre-distributed key material. Herein, the different nodes may each have a different identity associated therewith, and hence each different node may have identity-based pre-distributed key material of another identity stored therein. This includes the pair-wise identity-based key between the joining node 1 and the (border) router node 3, 4 and/or the pair-wise identity-based key between the joining node 1 and the relay node 2.

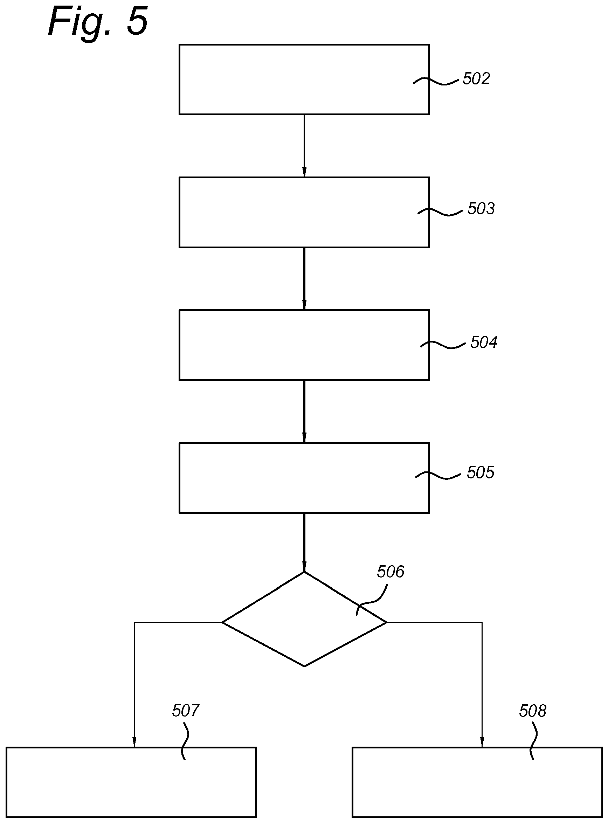

Fig. 5 illustrates a method for routing commissioning requests. This method may be performed by a router node, in particular a border router node, that routes commissioning requests of a mesh network. The process begins in step 502, when the border router node connects to the mesh network. This mesh network can comprise any number of nodes, including one or more relay nodes. In step 503, the border router node is connected to a wide area network. This wide area network can be accessed through a mobile telephone network device, for example, such as GPRS or UMTS. Through the wide area network, the border router node can connect to a server that controls grant of commissioning requests. This way, the server decides whether a joining node 1 is allowed access to the mesh network.

In step 504, the border router node receives a handshake signal for requesting to join the mesh network, an authentication token, and an identity of a joining node from a relay node.

In step 505, the border router node generates a pair-wise identity-based key between the joining node and the router node based on the identity of the joining node and an identity of the router node.

In step 506, the border router node checks whether the authentication token is valid, based on at least the pair-wise identity-based key. If the authentication token is valid, the border router node forwards the handshake signal to the server over the wide area network in step 507. Optionally, if the border router node determines that the authentication token is not valid in step 506, the border router node may send a notification to the server of the invalid joining attempt. Otherwise, if the border router node determines that the authentication token is not valid in step 506, the method ends in step 508 without forwarding the handshake signal to the server.

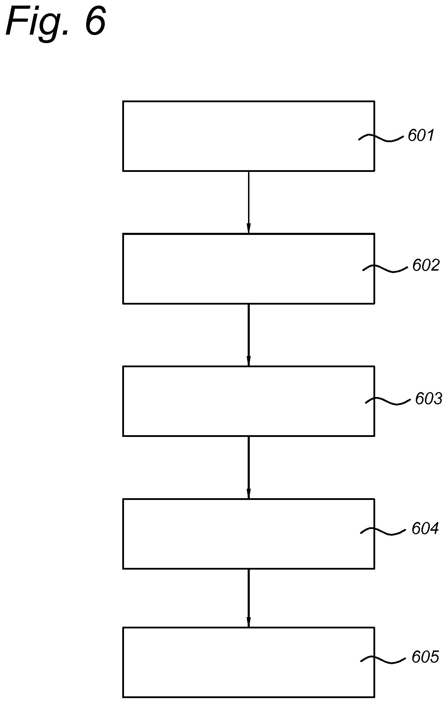

Fig. 6 illustrates a method for commissioning the joining node into a mesh network. This method may be performed by the joining node. As described before, the mesh network may comprise a relay node and a border router node, wherein the border router node is connected to a wide area network including a server for controlling grant of commissioning requests to join the mesh network. The method starts at step 601, in which the joining node receives an identity of the router node from the relay node. In step 602, the joining node generates a pair-wise identity-based key between the joining node and the router node based on an identity of the joining node and the identity of the router node. In step 603, the joining node generates a handshake signal for requesting permission to join the mesh network from the server. In step 604, the joining node calculates an authentication token based on authentication data of the joining node and encrypting the authentication token based on the pair-wise identity-based key between the joining node and the router node. In step 605, the joining node sends the handshake signal and the encrypted authentication token to the relay node.

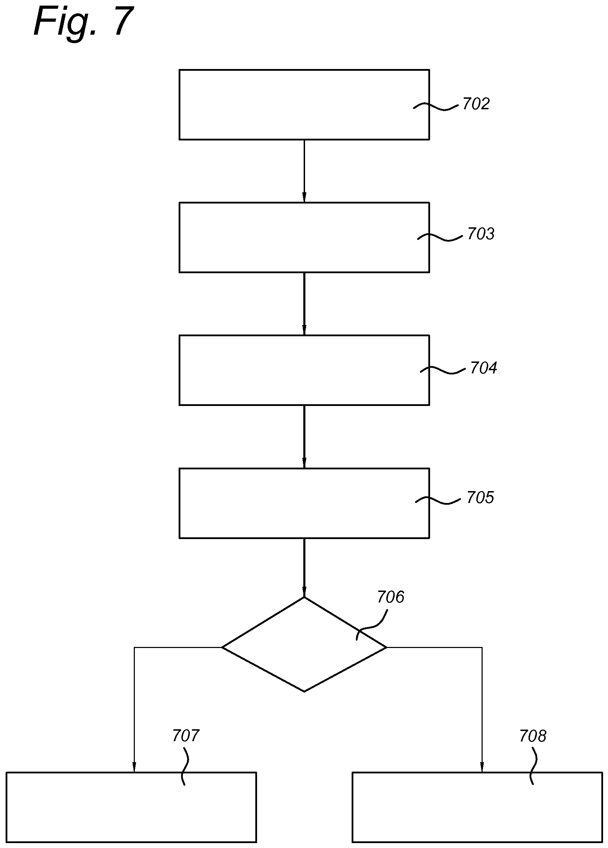

Fig. 7 illustrates a method for commissioning a joining node into a mesh network. This method may be performed by a relay node. As described above, the mesh network may comprise the relay node and a router node, wherein the router node is connected to a wide area network including a server for controlling grant of commissioning requests to join the mesh network. The method starts at step 702, in which the relay node sends an identity of the router node and an identity of the relay node to the joining node. In step 703, the relay node receives an identity of the joining node. In step 704, the relay node generates a pair-wise identity-based key between the joining node and the relay node, based on the identity of the joining node and the identity of the relay node. In step 705, the relay node receives a handshake signal for requesting permission for the joining node to join the mesh network and an authentication token from the joining node. In step 706, the relay node optionally verifies whether the handshake signal and the authentication token are signed based on the pair-wise identity-based key between the joining node and the relay node. If the verification is successful, the relay node forwards the handshake signal and the authentication token to the router node in step 707. Otherwise, the process ends in step 708. Optionally, in step 708 the relay node sends an informative message to the border router node or the server to inform of the rejected joining attempt.

The methods described hereinabove may be implemented by means of a computer program. Such programs may be executed by a processing device of the apparatus in which the node is implemented.

In an example, a method for commissioning a joining node 1 into the mesh network 7 can be summarized by the following steps:
the joining node 1 contacting a relay node 2 in the immediate neighborhood of the joining node 1 (for example, its wireless range) based on a neighbor discovery protocol.
   The joining node 1 sending its identity to the relay node 2, and the relay node 2 sending its identity to the joining node 1.
setting up a pair-wise identity-based key by the joining node 1 and the relay node 2, based on the identity of the joining node 1 and the identity of the relay node 2.
sending an identity of the border router node 4 to the joining node 1 by the relay node 2. setting up a pair-wise identity-based key by the joining node 1 based on the identity of the joining node 1 and the identity of the border router node 4.
the joining node 1 calculating an authentication token based on authentication data stored in a memory of the joining node and the pair-wise identity-based key between the joining node 1 and the border router node 4.
the joining node 1 sending a handshake signal and the authentication token to the relay node 2. This handshake signal and authentication token may be encrypted and/or authenticated by the key between Joining node and the Relay. This can be used as a first check at the Relay. the relay node 2 checking an identity of the joining node 1 based on the handshake signal. the relay node 2 forwarding the handshake signal to the server 6 via the border router node 4 by the relay node 2 only if the identity of the joining node 1 according to the handshake signal is the same as the identity of the joining node 1 that was used to set up the pair-wise identity-based key.
the border router node 4 checking whether the authentication token is valid.
the border router node 4 sending the handshake signal to the server over the wide area network only if the authentication token is valid.
the server 6 performing an authentication handshake procedure with the joining node 1 if the handshake signal is received by the server 6.

The authentication token may provide an additional check on the legitimacy of the joining node. Further, it may allow the border router 4 to keep track of which devices have been commissioned before. The border router 4 may have information of the nodes that have been commissioned (or attempted to get commissioned) over the mesh network via that border router and can refuse a commissioning request by a node that has previously sent such commissioning requests. This way, Denial of Service attacks may be prevented.

One way to generate the authentication token is to take (a subset of) the handshake messages and sign them with the pair-wise key, for example using HMAC. The border router, then takes the same (subset of) the handshake messages it received from the joining node, and checks if the HMAC it has *computed* matches with the one it *received* from the joining node. In such an embodiment, the HMAC is the authentication token.

Another way to generate the authenticity token by the joining node is to take credentials of the joining node, and hash them. The hashed credentials form the identity of the node. This identity is used to derive the pair-wise identity-based key, which can be used to encrypt credentials and (a subset of) the handshake messages. This way the border router can verify the authentication token and also make other checks on the credentials (such as whether it is blacklisted or whitelisted).

In an embodiment, the network is a mesh network with a CityTouch backend server. For example, the CTC protocol is used. The joining node and relay node can be connected to the Border Router through additional configured router nodes. In addition to this, the pair-wise identity-based keys may be employed using the HIMMO system. HIMMO is a key pre-distribution scheme which makes use of Hiding Information (HI) and Mixing Modular Operations (MMO) problems. HIMMO is a key agreement scheme in which a trusted third party sets up the keying material in each device based on the device's identity. This step is typically performed before the device attempts to join the network. For example, it is performed in the factory or by an organization before deployment of the devices for end users. Each node n thus has an identifier, IDₙ, and keying material KMₙ based on the identity IDₙ of node n. This keying material is used to establish pair-wise keys with other nodes. Such a pair-wise key between a node n with identity IDₙ and node n' with identity ID_{n'} can be represented by a symbol K_{n,n'}.

Sharing of a single network layer key (sometimes called an L2 key) among a large number of devices carries with it the risk that if a single device is compromised, the entire collection of devices that share the compromised L2 key are at risk since not only can the data sent/received from them be deciphered (if encryption at L2 is in use) but worse, packets can be injected into the network causing a Denial of Service (DoS) on the mesh. This could also result in injected packets being sent over the cellular link, which can result in monetary loss for the customer. Furthermore, injected packets need to be processed at the CityTouch server, which could pave the way for a DoS on the CityTouch server as well. Fixing this issue is by initiating a network wide re-key, can be complicated, especially if the network is large. This is also difficult since it is not easy to identify the captured device.

In the future iterations of CityTouch, it may be the case that certain devices do not come equipped with a cellular interface. In this case or the case where a device is outside the coverage area of the cellular network, commissioning of this device could happen over the mesh. Such a device connects to a suitable neighbouring commissioned node and the commissioned node acts as a relay, forwarding the initial secure handshake and commissioning messages to the CityTouch server. The link between the joining node and the relay is not secured by the L2 key, since the joining node does not yet have the L2 key. The L2 key is sent from the server to the device during the commissioning phase, if the joining node is allowed access to the network. This opens up another attack vector wherein packets injected with the correct headers (headers that represent initial handshake and commissioning messages) can travel all the way up to the sever and pose the same problems as mentioned before. The above described apparatuses and methods may help to overcome one or more of such problems.

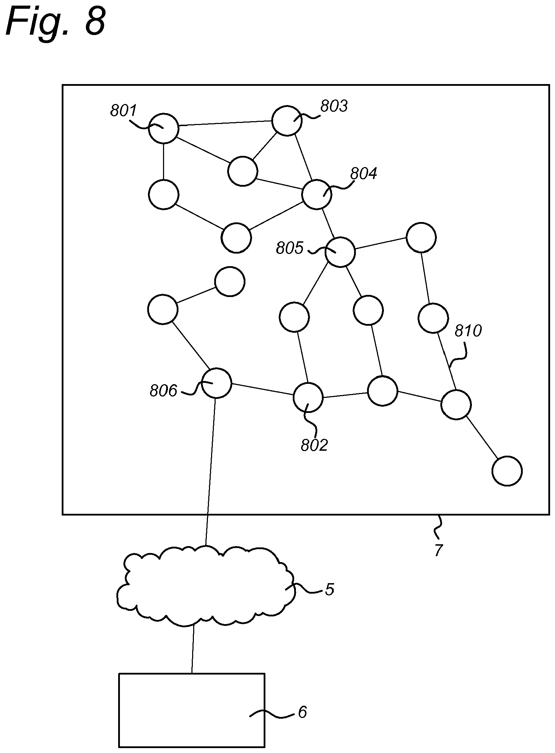

Fig. 8 illustrates a mesh network comprising a number of nodes (some of the nodes have been labelled with numerals 801 to 806). Lines, such as line 810, indicate a direct communication connection between two nodes. Such a direct communication connection can be a wireless link, for example. Nodes in the network that do not have a direct communication connection between them can still communicate, by forwarding the message through the network along a path of directly interconnected nodes. For example, a message from a source node 801 may be transmitted to a destination node 802 on the network, by forwarding the message though the network. On its way through the network, the node 803 may forward the message to node 804, the node 804 may forward the message to node 805, and so on, until the message reaches destination node 802. Further, a server 6 on wide area network 5 may be connected to the mesh network 7 through border router node 806.

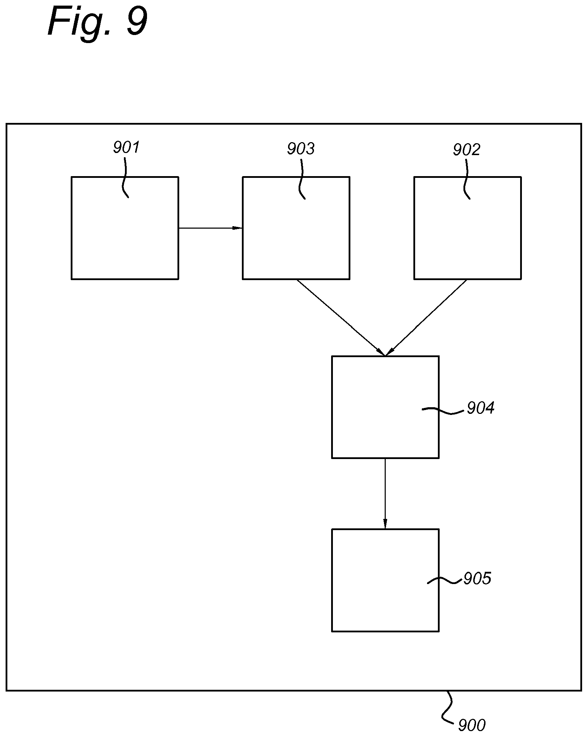

Fig. 9 illustrates an apparatus 900 in which the functionality of a node of a mesh network is implemented. For clarity, the apparatus 900 is referred to as first node 900. It will be understood that similar features may be present, according to any need thereto, in other nodes of the mesh network, including the second node which will be introduced hereinafter. The apparatus 900 may be, for example, a communication device. The apparatus facilitates secure exchange of messages in the mesh network. As illustrated, the first node 900 may comprise a memory 901 for storing a pre-shared identity-based key material associated with an identity of the first node. This key material may be stored, for example, in a read-only memory or non-volatile memory, and may be stored therein at the time of manufacturing the apparatus 900, or at a later time, usually before deployment to an end user.

The first node 900 may further comprise a network authentication unit 902 for performing an authentication procedure with a server 6 (refer to Fig. 8 for an example configuration of a mesh network with a server, although other configurations may be used also). The authentication procedure allows the first node 900 to gain access to the mesh network, according to a commissioning protocol which is known in the art per se. Optionally, the commissioning protocol described in respect of Figs. 1 to 7 may be used for this purpose. The network authentication unit 902 may be configured to receive a network-wide key from the server 6, wherein the network-wide key enables access to the mesh network. The network-wide key may be the same for all the nodes on the mesh network. Other mesh networks may be created using different network-wide keys.

The first node 900 may comprise a peer authentication unit 903 for performing an authentication procedure with a second node in the mesh network 7, wherein the peer authentication unit 903 may be configured to receive an identity of the second node through the mesh network 7. The peer authentication unit 903 may be further configured to generate a pair-wise identity-based key between the first node and the second node, based on the pre-shared identity-based key material of the first node and the identity of the second node. Manners to generate such a key have been described and referenced elsewhere in this document.

The first node 900 may comprise a combined key generator 904 for generating a combined key. To this end, the combined key generator 904 may be configured to combine the network-wide key with the pair-wise identity-based key. Several ways to combine the two keys are possible. For example, keys may be combined by means of addition or bitwise addition modulo 2 (XOR), or other kinds of combination are possible.

Preferably, the combined key generator 904 is configured to combine the two keys such that the two original keys cannot be extracted from the combined key, although this is not a limitation. Ways to achieve this are known in the art by itself. XOR and addition are examples of how to achieve this.

The first node 900 may further comprise a messaging unit 905. The messaging unit 905 is configured to secure a communication message exchanged between the first node and the second node through the mesh network, based on the combined key. Examples of how to secure the communication message include encryption/decryption, and digital signature.

In a particular example, the peer authentication unit 903 is configured to detect the second node as a node having a direct communication connection with the first node. An example of a direct communication connection is a wireless link. 'Direct communication connection' is to be understood as a connection that does not need a communication path along other nodes in the mesh network.

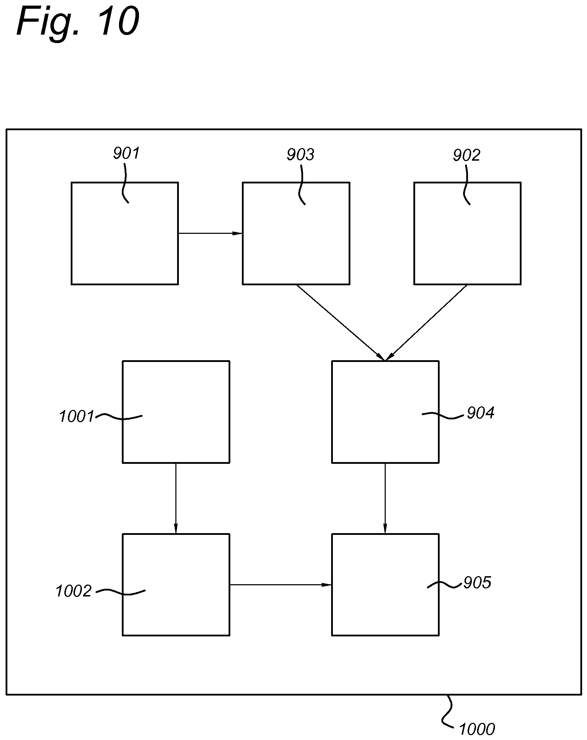

Fig. 10 illustrates an apparatus of the first node 1000. The first node 1000 may comprise the features of the first node 900, as has been indicated by marking similar components by means of the same reference numerals.

The first node 1000 further comprises an application authentication unit 1001. The application authentication unit 1001 is configured to perform an authentication procedure with an application node in the mesh network. The application authentication unit 1001 and the application node are so-called herein because their features as described herein may relate to an application layer of the mesh network, although this is not a limitation. This application node does not have to be directly connected to the first node, but can be connected via at least the second node in the mesh network. For example, the first node 1000 is a source node which generates the message, and the application node is the destination node to which the message is addressed. Alternatively, the first node 1000 is the destination node and the application node is the source node. Because messages may be exchanged in both ways between the two nodes, the role of source and destination node can be interchanged constantly.

Referring to Fig. 8, the source node could be 801 and the destination node could be 802. Nodes 803, 804, and 805 are examples of nodes on a path from the source node 801 to the destination node 802. Thus, a message may travel from a source node 801 via a second node 804 to a destination node 802.

Referring again to Fig. 10, the application authentication unit 1001 is configured to receive an identity of the application node through the mesh network, possibly via the nodes on the path between the first node and the application node, and to generate a pair-wise identity-based key between the first node and the application node, based on the pre-shared identity-based key material and the identity of the application node.

The first node 1000 may further comprise an application unit 1002 configured to secure communication messages exchanged between the first node and the application node based on the pair-wise identity-based key between the first node and the application node. Such security may comprise encrypting and/or digital signing.

The application unit 1002 may be configured to exchange the secured message with the messaging unit 905. The messaging unit 905 may be configured to add its own security layer (encryption, digital signature) to the secured message of the application unit 1002.

Thus, the apparatus may be configured to secure the communication message exchanged between the first node and the application node via the second node firstly based on the pair-wise identity-based key between the first node and the application node, and secondly based on the combined key.

For example, if the first node 1000 is the source node, the message may be first encrypted or signed using the pair-wise identity-based key between the first node and the application node (by the application unit 1002). Next, the encrypted or signed message may be signed or encrypted using the combined key (by the messaging unit 905).

The message may then be sent to a second node on the mesh network that is on a path from the first node to the application node, and has a direct communication connection with the first node.

If the first node 1000 is the destination node, the first node 1000 may receive the message from the second node, which is on a path from the first node to the application node, and has a direct communication connection with the first node. The messaging unit 905 may first decrypt or verify a digital signature of the message using the combined key. Next, the application unit 1002 may decrypt or verify a digital signature of the message using the pair-wise identity-based key between the first node and the application node.

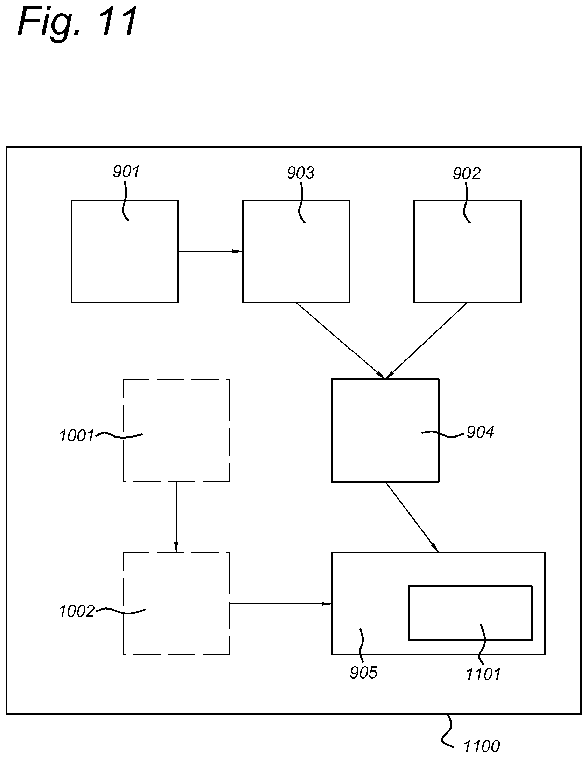

Fig. 11 illustrates an apparatus of the first node 1100. The first node 1100 can forward a message received from a second node to a third node. For example, referring to Fig. 8, the first node 1100 can be for example 804, and first node 804 can forward a message received from second node 803 to third node 805. That message may be underway from source node 801 to destination node 802, as explained before.

The first node 1100 may comprise the features of the first node 900, as has been indicated by marking similar components by means of the same reference numerals. Optionally, the first node 1100 may further comprise the application authentication unit 1001 and the application unit 1002 shown in Fig. 10.

In the example implementation of Fig. 11, the peer authentication unit 903 is configured to perform the authentication procedure with both the second node, as described above in respect of Fig. 9, and with the third node in the mesh network. To perform the authentication procedure with the third node, the peer authentication unit 903 is configured to receive an identity of the third node through the mesh network, for example via a direct connection. Further, the peer authentication unit 903 is configured to generate a pair-wise identity-based key between the first node and the third node, based on the pre-shared identity-based key material and the identity of the third node.

The combined key generator 904 is configured to generate a further combined key by combining the network-wide key with the pair-wise identity-based key between the first node and the third node. Consequently, the combined key generator 904 generates at least two different combined keys, one combined key for communicating with the second node, and a further combined key for communicating with the third node.

The messaging unit 905 may comprise a forwarding unit 1101. The function of the forwarding unit is to forward a message through the mesh network, for example using direct connections with the second node and the third node. The forwarding unit 1101 may be configured to receive a message from the second node, and verify that the message is secured with the combined key that was based on the network-wide key and the pair-wise identity-based key between the first node and the second node. This way it is ensured that the message has not been inserted by a device that was not properly authenticated.

Further, the forwarding unit 1101 may be configured to secure the message with the further combined key. For example, the forwarding unit 1101 may remove the security features based on the combined key from the message, and replace them with the security features based on the further combined key. Such security features may include encryption and/or digital signature.

After the forwarding unit 1101 has secured the message with the further combined key, the forwarding unit 1101 is configured to transmit the message to the third node.

In a particular example of the apparatus of Fig. 11, the forwarding unit 1101 is configured to process a message that is an encrypted message that is encrypted according to an encryption scheme set up between a source node and a destination node in addition to being secured with the combined key or the further combined key. For example, the message is generated using the application authentication unit 1001 of another node.

For example, the forwarding unit 1101 is configured to decrypt the received message according to the combined key to obtain a message that is still encrypted according to the encryption scheme set up between the source node and the destination node, and generate the forwarded message by encrypting the still encrypted message according to the further combined key.

The following features may be applied to each of the above described examples, including the ones of Fig. 8 to 11.

In a particular implementation, the encryption scheme used between source node and destination node is implemented as an application layer security, and the encryption with the combined key is implemented as a network layer security.

In an example implementation, at least one of the following keys is a symmetric cryptographic key for a particular symmetric key cryptographic protocol: the network-wide key, the combined key, and the pair-wise identity-based key.

In an example implementation, at least the network-wide key and the combined key are keys for the same symmetric key cryptographic protocol.

In an example implementation, the messaging unit is configured to secure the communication messages with a symmetric cipher based on the combined key.

In an example implementation, the forwarding unit 1101 is configured to process a message that is on its way from the originating node to the destination node by forwarding the message from one node to the other on a route from the originating node to the destination node according to a protocol based on Datagram Transport Layer Security (DTLS).

In an example implementation, the apparatus 900 comprises an application unit for exchanging application data with another node on the mesh network using the messaging unit, wherein the application unit is configured to secure messages exchanged with the other node at an application level, so that the second node cannot decipher the messages, wherein the messaging unit is configured to further secure the message with the combined key and send the message to the second node.

In an example implementation, the examples of Fig. 1 to 7 are combined with the examples of Fig. 8 to 11. For example, the network authentication unit 902 is configured to communicate with the server 6 via a border router node 4 in the mesh network. The network authentication unit 902 may comprise, for example, the features of the joining node 1 described above in respect of Fig. 3. This way, the network-wide key is obtained from the server 6. The commissioning procedure that the server 6 and the joining node 1 perform (if the handshake signal is received by the server 6), may comprise sending the network-wide key by the server in case the joining node 1 is authenticated, and receiving the network-wide key by the joining node. After that, the network-wide key can be used by the combined key generator 904 to generate the combined key.

The pre-shared key material may be stored in the memory of the first node before the first node attempts to join a mesh network. For example, the pre-shared key material may be stored in the factory when the apparatus is produced.

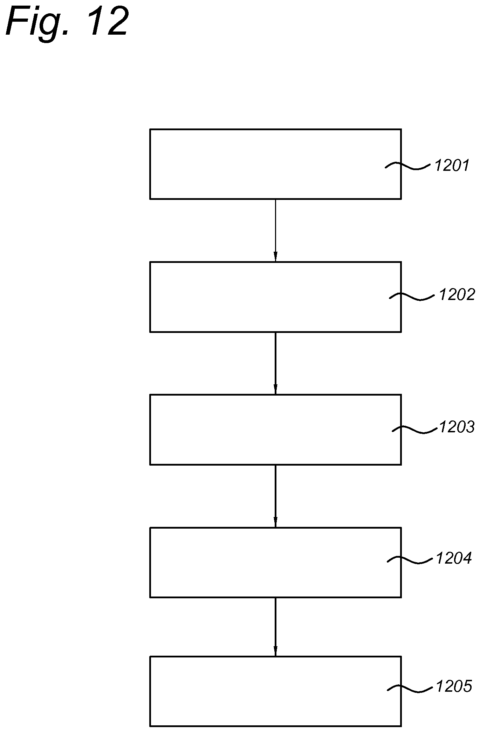

Fig. 12 illustrates a method of a first node for secure exchange of messages in a mesh network comprising a plurality of network nodes. The method starts at step 1201 of storing a pre-shared identity-based key material associated with an identity of the network node. In step 1202, the first node performs an authentication procedure with a server to gain access to the mesh network, comprising receiving a network-wide key from the server, wherein the network-wide key enables access to the mesh network. In step 1203, the first node performs an authentication procedure with a second node in the mesh network, comprising receiving an identity of the second node through the mesh network, and to generate a pair-wise identity-based key between the first node and the second node, based on the pre-shared identity-based key material and the identity of the second node. In step 1204, the first node generates a combined key by combining the network-wide key with the pair-wise identity-based key. In step 1205, the joining node secures a communication message exchanged between the first node and the second node through the mesh network, based on the combined key.

An example provides an apparatus of a first node for secure exchange of messages in a mesh network comprising a plurality of network nodes, the apparatus comprising
a memory for storing pre-shared identity-based key material associated with an identity of the first node;
a network authentication unit for performing an authentication procedure with a server to gain access to the mesh network, wherein the network authentication unit is configured to receive a network-wide key from the server, wherein the network-wide key enables access to the mesh network;
a peer authentication unit for performing an authentication procedure with a second node in the mesh network, wherein the peer authentication unit is configured to receive an identity of the second node through the mesh network, and to generate a pair-wise identity-based key between the first node and the second node, based on the pre-shared identity-based key material and the identity of the second node;
a combined key generator for generating a combined key by combining the network-wide key with the pair-wise identity-based key; and
a messaging unit for securing a communication message exchanged between the first node and the second node through the mesh network, based on the combined key.

This allows to improve the security of the mesh network. If the network-wide key is compromised, this does not mean that an attacker can communicate with the devices in the network, because the messages are protected by a combined key in which the network-wide key is combined with a pair-wise identity-based key. If a combined key is compromised, only communication with one of the devices in the network is possible; this could be repaired by changing the identity-based key material of one or both nodes affected by the compromised combined key.

For example, the peer authentication unit is configured to detect the second node as a node having a direct communication connection with the first node. This allows to protect a specific direct communication connection between two specific devices.

The apparatus may further comprise an application authentication unit for performing an authentication procedure with an application node in the mesh network, wherein the application node is connected to the first node via at least the second node in the mesh network, wherein the application authentication unit is configured to receive an identity of the application node through the mesh network, and to generate a pair-wise identity-based key between the first node and the application node, based on the pre-shared identity-based key material and the identity of the application node;
the apparatus further comprising an application unit for securing the communication message based on the pair-wise identity-based key between the first node and the application node, and
wherein the messaging unit is configured to secure the communication message with the combined key in addition to the security provided by the application unit.

This allows more levels of security: at a network layer, direct connections for forwarding a message through the network can be protected using the combined key, and at an application layer, the message may be protected from end to end as it travels from a source node to a destination node along the network.

The apparatus may be configured for forwarding a message from the second node to a third node,
wherein the peer authentication unit is configured to perform the authentication procedure also with the third node in the mesh network, wherein the peer authentication unit is configured to receive an identity of the third node through the mesh network, and to generate a pair-wise identity-based key between the first node and the third node, based on the pre-shared identity-based key material and the identity of the third node;
wherein the combined key generator is configured to generate a further combined key by combining the network-wide key with the pair-wise identity-based key between the first node and the third node;
wherein the messaging unit comprises a forwarding unit for receiving a message from the second node, verifying that the message is secured with the combined key, and forwarding the message to the third node, wherein the forwarded message is secured with the further combined key.

This allows forwarding messages in a more secure manner. This way, the message can hop along the nodes while being forwarded through the network from node to node, wherein the transmission between each pair of nodes is secured with a different combined key.

The message may be an encrypted message that is encrypted according to an encryption scheme set up between a source node and a destination node in addition to being secured with the combined key or the further combined key. This allows multiple layers of security.

The forwarding unit may be configured to decrypt the received message according to the combined key to obtain a message that is still encrypted according to the encryption scheme set up between the source node and the destination node, and generate the forwarded message by encrypting the still encrypted message according to the further combined key.

For example, the network-wide key may be a symmetric cryptographic key for a particular symmetric key cryptographic protocol. For example, the combined key may also be a symmetric cryptographic key for that particular symmetric key cryptographic protocol. For example, the pair-wise identity-based key may also be a symmetric cryptographic key for that particular symmetric key cryptographic protocol. In other words, at least one of the following keys can be a symmetric cryptographic key for a particular symmetric key cryptographic protocol: the network-wide key, the combined key, and the pair-wise identity-based key. This enhances compatibility of the system with existing system by making it possible to use the same symmetric key cryptographic protocol for encryption and decryption, regardless of which one of these keys has been generated.

For example, at least the network-wide key and the combined key are keys for the same cryptographic protocol. This simplifies implementation of the system when starting from a system that uses a network-wide key for communications.

The combined key may be configured to secure communication at a network layer (L2) of the mesh network. This enables using a key that is specific for a pair of devices to secure communications at a network layer.

The message may be an encrypted message that is encrypted according to an encryption scheme set up between a source node and a destination node in addition to being secured with the combined key or the further combined key. The source node may be a node that generates the message, and the destination node may be any node on the network that is selected by the source node as the final destination of the message. This allows an additional layer of security, because the forwarding nodes that are not the source node or the destination node may not be able to decrypt the message.

The forwarding unit may be configured to decrypt the received message according to the combined key to obtain a message that is still encrypted according to the encryption scheme set up between the source node and the destination node, and generate the forwarded message by encrypting the still encrypted message according to the further combined key. This allows to secure the message both at e.g. a 'network' level, from forwarding unit to forwarding unit, and at e.g. an 'application' level, from source to destination node.

The messaging unit may be configured to secure the communication messages with a symmetric cipher based on the symmetric cryptographic key.

For example, the forwarding unit is configured to process a message that is on its way from the originating node to the destination node by forwarding the message from one node to the other on a route from the originating node to the destination node according to a protocol based on Datagram Transport Layer Security (DTLS). This is a suitable protocol for this purpose.

The apparatus may comprise an application unit for exchanging application data with another node on the mesh network using the messaging unit, wherein the application unit is configured to secure messages exchanged with the other node at an application level, so that the second node cannot decipher the messages, wherein the messaging unit is configured to further secure the message with the combined key and send the message to the second node. This helps to secure the communications.

For example, the network authentication unit is configured to communicate with the server via a border router node in the mesh network that connects the mesh network with a wide area network comprising the server. This facilitates remote control of the network access.

The pre-shared key material may be present in the memory before the first node attempts to join a mesh network. This facilitates distributing the pre-shared key material of each device in a trusted and/or efficient way.

According to another example, a method of a first node for secure exchange of messages in a mesh network comprising a plurality of network nodes is provided, the method comprising
storing a pre-shared identity-based key material associated with an identity of the network node;
performing an authentication procedure with a server to gain access to the mesh network, comprising receiving a network-wide key from the server, wherein the network-wide key enables access to the mesh network;
performing an authentication procedure with a second node in the mesh network, comprising receiving an identity of the second node through the mesh network, and to generate a pair-wise identity-based key between the first node and the second node, based on the pre-shared identity-based key material and the identity of the second node;
generating a combined key by combining the network-wide key with the pair-wise identity-based key; and
securing a communication message exchanged between the first node and the second node through the mesh network, based on the combined key.

The method may be implemented as a computer program product comprising computer code for causing a processing device to perform the method set forth.

It will be appreciated that the invention also applies to computer programs, particularly computer programs on or in a carrier, adapted to put the invention into practice. The program may be in the form of a source code, an object code, a code intermediate source and object code such as in a partially compiled form, or in any other form suitable for use in the implementation of the method according to the invention. It will also be appreciated that such a program may have many different architectural designs. For example, a program code implementing the functionality of the method or system according to the invention may be sub-divided into one or more sub-routines. Many different ways of distributing the functionality among these sub-routines will be apparent to the skilled person. The sub-routines may be stored together in one executable file to form a self-contained program. Such an executable file may comprise computer-executable instructions, for example, processor instructions and/or interpreter instructions (e.g. Java interpreter instructions). Alternatively, one or more or all of the sub-routines may be stored in at least one external library file and linked with a main program either statically or dynamically, e.g. at run-time. The main program contains at least one call to at least one of the sub-routines. The sub-routines may also comprise calls to each other. An embodiment relating to a computer program product comprises computer-executable instructions corresponding to each processing step of at least one of the methods set forth herein. These instructions may be sub-divided into sub-routines and/or stored in one or more files that may be linked statically or dynamically. Another embodiment relating to a computer program product comprises computer-executable instructions corresponding to each means of at least one of the systems and/or products set forth herein. These instructions may be sub-divided into sub-routines and/or stored in one or more files that may be linked statically or dynamically.

The carrier of a computer program may be any entity or device capable of carrying the program. For example, the carrier may include a storage medium, such as a ROM, for example, a CD ROM or a semiconductor ROM, or a magnetic recording medium, for example, a flash drive or a hard disk. Furthermore, the carrier may be a transmissible carrier such as an electric or optical signal, which may be conveyed via electric or optical cable or by radio or other means. When the program is embodied in such a signal, the carrier may be constituted by such a cable or other device or means. Alternatively, the carrier may be an integrated circuit in which the program is embedded, the integrated circuit being adapted to perform, or to be used in the performance of, the relevant method.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

## Claims

1. An apparatus of a router node (3, 4) for routing commissioning requests, comprising
a mesh network unit (201) for connecting the router node to a mesh network comprising a relay node;
a wide area network unit (202) for connecting the router node to a wide area network including a server for controlling grant of commissioning requests to join the mesh network,
a receiving unit (203) for receiving a handshake signal for requesting to join the mesh network, an authentication token, and an identity of a joining node from a relay node;
a key generating unit (204) for generating a pair-wise identity-based key between the joining node and the router node based on the identity of the joining node and an identity of the router node;
a checking unit (205) for checking whether the authentication token is valid based on at least the pair-wise identity-based key;
a forwarding unit (206) for forwarding the handshake signal to the server over the wide area network only if the authentication token is valid.

2. The apparatus of the router node of claim 1, wherein the checking unit (205) is configured to compare information authenticated with the authentication token to entries in a blacklist and/or entries in a whitelist to determine whether the authentication token is valid.

3. An apparatus of a joining node (1) for commissioning the joining node into a mesh network (7) comprising a relay node (2) and a router node (3, 4), wherein the router node (3, 4) is connected to a wide area network (5) including a server (6) for controlling grant of commissioning requests to join the mesh network (7), the apparatus comprising
a receiving unit (302) for receiving an identity of the router node from the relay node;
a key generating unit (303) for generating a pair-wise identity-based key between the joining node and the router node based on an identity of the joining node and the identity of the router node;
a handshake unit (304) for generating a handshake signal for requesting permission to join the mesh network from the server;
an authentication token unit (305) for calculating an authentication token based on authentication data of the joining node and the pair-wise identity-based key between the joining node and the router node;
a sending unit (306) for sending the handshake signal and the authentication token to the relay node.

4. The apparatus of the joining node of claim 3,
wherein the key generating unit (303) is configured to further generate a pair-wise identity-based key between the joining node and the relay node, based on the identity of the joining node and an identity of the relay node;
further comprising a signing unit (307) for signing the handshake signal and the authentication token based on the pair-wise identity-based key between the joining node and the relay node; and
wherein the sending unit (306) is configured to send the handshake signal and the authentication token as signed by the signing unit to the relay node.

5. An apparatus of a relay node (2), for commissioning a joining node (1) into a mesh network (7) comprising the relay node (2) and a router node (3, 4), wherein the router node (3, 4) is connected to a wide area network (5) including a server (6) for controlling grant of commissioning requests to join the mesh network (7), the apparatus comprising
a sending unit (401) for sending an identity of the router node and an identity of the relay node to the joining node;
an identity receiving unit (402) for receiving an identity of the joining node;
a key generating unit (403) for generating a pair-wise identity-based key between the joining node and the relay node, based on the identity of the joining node and the identity of the relay node;
a handshake receiving unit (405) for receiving a handshake signal for requesting permission for the joining node to join the mesh network and an authentication token from the joining node;
a verifying unit (404) for verifying whether the handshake signal and the authentication token are signed based on the pair-wise identity-based key between the joining node and the relay node;
a forwarding unit (406) for forwarding the handshake signal and the authentication token to the router node based on an output of the verifying unit.

6. The apparatus of any preceding claim, wherein the authentication token is indicative of a proof of an identity of the joining node (1).

7. The apparatus of any preceding claim, wherein the router node (3, 4) is a border router node (4) of the mesh network (7) that is directly connected to the wide area network (7).

8. The apparatus according to any preceding claim, wherein the handshake signal comprises a datagram transport layer security, DTLS, handshake signal.

9. The apparatus according to any preceding claim, wherein the key generating unit (204, 303, 403) is configured to generate the pair-wise identity-based key between the joining node (1) and the router node (3, 4) and/or the pair-wise identity-based key between the joining node (1) and the relay node (2) based on an identity-based pre-distributed key material.

10. A method of a router node for routing commissioning requests, comprising
connecting (502) the router node to a mesh network comprising a relay node;
connecting (503) the router node to a wide area network including a server for controlling grant of commissioning requests to join the mesh network,
receiving (504) a handshake signal for requesting to join the mesh network, an authentication token, and an identity of a joining node from a relay node;
generating (505) a pair-wise identity-based key between the joining node and the router node based on the identity of the joining node and an identity of the router node;
checking (506) whether the authentication token is valid based on at least the pair-wise identity-based key; and
forwarding (507) the handshake signal to the server over the wide area network only if the authentication token is valid.

11. A method of a joining node for commissioning the joining node into a mesh network comprising a relay node and a router node, wherein the router node is connected to a wide area network including a server for controlling grant of commissioning requests to join the mesh network, the method comprising
receiving (601) an identity of the router node from the relay node;
generating (602) a pair-wise identity-based key between the joining node and the router node based on an identity of the joining node and the identity of the router node;
generating (603) a handshake signal for requesting permission to join the mesh network from the server;
calculating (604) an authentication token based on authentication data of the joining node and encrypting the authentication token based on the pair-wise identity-based key between the joining node and the router node; and
sending (605) the handshake signal and the authentication token to the relay node.

12. A method of a relay node, for commissioning a joining node into a mesh network comprising the relay node and a router node, wherein the router node is connected to a wide area network including a server for controlling grant of commissioning requests to join the mesh network, the method comprising
sending (702) an identity of the router node and an identity of the relay node to the joining node;
receiving (703) an identity of the joining node;
generating (704) a pair-wise identity-based key between the joining node and the relay node, based on the identity of the joining node and the identity of the relay node;
receiving (705) a handshake signal for requesting permission for the joining node to join the mesh network and an authentication token from the joining node;
verifying (706) whether the handshake signal and the authentication token are signed based on the pair-wise identity-based key between the joining node and the relay node; and
forwarding (707) the handshake signal and the authentication token to the router node based on an output of the verifying unit.

13. A computer program product stored on a computer readable media, the computer program comprising instructions for causing a processing device to perform the method according to any one of claims 10 to 12.

## Patentansprüche

1. Vorrichtung eines Routerknotens (3, 4) zum Routen von Inbetriebnahmeanfragen, umfassend
eine Mesh-Netzwerkeinheit (201) zum Verbinden des Routerknotens mit einem Mesh-Netzwerk, das einen Vermittlungsknoten umfasst;
eine Weitverkehrsnetzwerk-Einheit (202) zum Verbinden des Routerknotens mit einem Weitverkehrsnetzwerk, das einen Server zum Steuern von Gewährung von Inbetriebnahmeanfragen, um dem Mesh-Netzwerk beizutreten, einschließt,
eine Empfangseinheit (203) zum Empfangen eines Handshake-Signals zum Anfragen, dem Mesh-Netzwerk beizutreten, eines Authentifizierungstokens und einer Identität eines beitretenden Knotens von einem Vermittlungsknoten;
eine Schlüsselerzeugungseinheit (204) zum Erzeugen eines paarweisen identitätsbasierten Schlüssels zwischen dem beitretenden Knoten und dem Routerknoten auf Basis der Identität des beitretenden Knotens und einer Identität des Routerknotens;
eine Kontrolleinheit (205) zum Kontrollieren, mindestens auf Basis des paarweisen identitätsbasierten Schlüssels, ob der Authentifizierungstoken gültig ist;
eine Weiterleitungseinheit (206) zum Weiterleiten des Handshake-Signals über das Weitverkehrsnetzwerk an den Server nur dann, wenn der Authentifizierungstoken gültig ist.

2. Vorrichtung des Routerknotens nach Anspruch 1, wobei die Kontrolleinheit (205) dazu konfiguriert ist, mit dem Authentifizierungstoken authentifizierte Informationen mit Einträgen in einer Blacklist und/oder Einträgen in einer Whitelist zu vergleichen, um zu bestimmen, ob der Authentifizierungstoken gültig ist.

3. Vorrichtung eines beitretenden Knotens (1) zur Inbetriebnahme des beitretenden Knotens in einem Mesh-Netzwerk (7), das einen Vermittlungsknoten (2) und einen Routerknoten (3, 4) umfasst, wobei der Routerknoten (3, 4) mit einem Weitverkehrsnetzwerk (5) verbunden ist, das einen Server (6) zum Steuern von Gewährung von Inbetriebnahmeanfragen, um dem Mesh-Netzwerk (7) beizutreten, einschließt, wobei die Vorrichtung umfasst
eine Empfangseinheit (302) zum Empfangen einer Identität des Routerknotens vom Vermittlungsknoten;
eine Schlüsselerzeugungseinheit (303) zum Erzeugen eines paarweisen identitätsbasierten Schlüssels zwischen dem beitretenden Knoten und dem Routerknoten auf Basis einer Identität des beitretenden Knotens und der Identität des Routerknotens;
eine Handshake-Einheit (304) zum Erzeugen eines Handshake-Signals zum Anfragen einer Genehmigung vom Server, um dem Mesh-Netzwerk beizutreten;
eine Authentifizierungstoken-Einheit (305) zum Berechnen eines Authentifizierungstokens auf Basis von Authentifizierungsdaten des beitretenden Knotens und des paarweisen identitätsbasierten Schlüssels zwischen dem beitretenden Knoten und dem Routerknoten;
eine Sendeeinheit (306) zum Senden des Handshake-Signals und des Authentifizierungstokens an den Vermittlungsknoten.

4. Vorrichtung des beitretenden Knotens nach Anspruch 3,
wobei die Schlüsselerzeugungseinheit (303) dazu konfiguriert ist, weiter einen paarweisen identitätsbasierten Schlüssel zwischen dem beitretenden Knoten und dem Vermittlungsknoten auf Basis der Identität des beitretenden Knotens und einer Identität des Vermittlungsknotens zu erzeugen;
weiter eine Signiereinheit (307) umfassend zum Signieren des Handshake-Signals und des Authentifizierungstokens auf Basis des paarweisen identitätsbasierten Schlüssels zwischen dem beitretenden Knoten und dem Vermittlungsknoten; und
wobei die Sendeeinheit (306) dazu konfiguriert ist, das Handshake-Signal und den Authentifizierungstoken wie von der Signiereinheit signiert an den Vermittlungsknoten zu senden.

5. Vorrichtung eines Vermittlungsknotens (2) zur Inbetriebnahme eines beitretenden Knotens (1) in einem Mesh-Netzwerk (7), das den Vermittlungsknoten (2) und einen Routerknoten (3, 4) umfasst, wobei der Routerknoten (3, 4) mit einem Weitverkehrsnetzwerk (5) verbunden ist, das einen Server (6) zum Steuern von Gewährung von Inbetriebnahmeanfragen, um dem Mesh-Netzwerk (7) beizutreten, einschließt, wobei die Vorrichtung umfasst
eine Sendeeinheit (401) zum Senden einer Identität des Routerknotens und einer Identität des Vermittlungsknotens an den beitretenden Knoten;
eine Identitätsempfangseinheit (402) zum Empfangen einer Identität des beitretenden Knotens;
eine Schlüsselerzeugungseinheit (403) zum Erzeugen eines paarweisen identitätsbasierten Schlüssels zwischen dem beitretenden Knoten und dem Vermittlungsknoten auf Basis der Identität des beitretenden Knotens und der Identität des Vermittlungsknotens;
eine Handshake-Empfangseinheit (405) zum Empfangen eines Handshake-Signals zum Anfragen einer Genehmigung für den beitretenden Knoten, dem Mesh-Netzwerk beizutreten, und eines Authentifizierungstokens vom beitretenden Knoten;
eine Überprüfungseinheit (404) zum Überprüfen, ob das Handshake-Signal und der Authentifizierungstoken auf Basis des paarweisen identitätsbasierten Schlüssels zwischen dem beitretenden Knoten und dem Vermittlungsknoten signiert sind;
eine Weiterleitungseinheit (406) zum Weiterleiten des Handshake-Signals und des Authentifizierungstokens auf Basis eines Ausgangs der Überprüfungseinheit an den Routerknoten.

6. Vorrichtung nach einem vorstehenden Anspruch, wobei der Authentifizierungstoken einen Beweis einer Identität des beitretenden Knotens (1) anzeigt.

7. Vorrichtung nach einem vorstehenden Anspruch, wobei der Routerknoten (3, 4) ein Grenzrouterknoten (4) des Mesh-Netzwerks (7) ist, der direkt mit dem Weitverkehrsnetzwerk (7) verbunden ist.

8. Vorrichtung nach einem vorstehenden Anspruch, wobei das Handshake-Signal ein Datagram Transport Layer Security-, DTLS, Handshake-Signal umfasst.

9. Vorrichtung nach einem vorstehenden Anspruch, wobei die Schlüsselerzeugungseinheit (204, 303, 403) dazu konfiguriert ist, den paarweisen identitätsbasierten Schlüssel zwischen dem beitretenden Knoten (1) und dem Routerknoten (3, 4) und/oder den paarweisen identitätsbasierten Schlüssel zwischen dem beitretenden Knoten (1) und dem Vermittlungsknoten (2) auf Basis eines identitätsbasierten vorverteilten Schlüsselmaterials zu erzeugen.

10. Verfahren eines Routerknotens zum Routen von Inbetriebnahmeanfragen, umfassend
Verbinden (502) des Routerknotens mit einem Mesh-Netzwerk, das einen Vermittlungsknoten umfasst;
Verbinden (503) des Routerknotens mit einem Weitverkehrsnetzwerk, das einen Server zum Steuern von Gewährung von Inbetriebnahmeanfragen, um dem Mesh-Netzwerk beizutreten, einschließt,
Empfangen (504) eines Handshake-Signals zum Anfragen, dem Mesh-Netzwerk beizutreten, eines Authentifizierungstokens und einer Identität eines beitretenden Knotens von einem Vermittlungsknoten;
Erzeugen (505) eines paarweisen identitätsbasierten Schlüssels zwischen dem beitretenden Knoten und dem Routerknoten auf Basis der Identität des beitretenden Knotens und einer Identität des Routerknotens;
Kontrollieren (506), mindestens auf Basis des paarweisen identitätsbasierten Schlüssels, ob der Authentifizierungstoken gültig ist; und
Weiterleiten (507) des Handshake-Signals über das Weitverkehrsnetzwerk an den Server nur dann, wenn der Authentifizierungstoken gültig ist.

11. Verfahren eines beitretenden Knotens zur Inbetriebnahme des beitretenden Knotens in einem Mesh-Netzwerk, das einen Vermittlungsknoten und einen Routerknoten umfasst, wobei der Routerknoten mit einem Weitverkehrsnetzwerk verbunden ist, das einen Server zum Steuern von Gewährung von Inbetriebnahmeanfragen, um dem Mesh-Netzwerk beizutreten, einschließt, wobei das Verfahren umfasst
Empfangen (601) einer Identität des Routerknotens vom Vermittlungsknoten;
Erzeugen (602) eines paarweisen identitätsbasierten Schlüssels zwischen dem beitretenden Knoten und dem Routerknoten auf Basis einer Identität des beitretenden Knotens und der Identität des Routerknotens;
Erzeugen (603) eines Handshake-Signals zum Anfragen einer Genehmigung vom Server, um dem Mesh-Netzwerk beizutreten;
Berechnen (604) eines Authentifizierungstokens auf Basis von Authentifizierungsdaten des beitretenden Knotens, und Verschlüsseln des Authentifizierungstokens auf Basis des paarweisen identitätsbasierten Schlüssels zwischen dem beitretenden Knoten und dem Routerknoten; und
Senden (605) des Handshake-Signals und des Authentifizierungstokens an den Vermittlungsknoten.

12. Verfahren eines Vermittlungsknotens zur Inbetriebnahme eines beitretenden Knotens in einem Mesh-Netzwerk, das den Vermittlungsknoten und einen Routerknoten umfasst, wobei der Routerknoten mit einem Weitverkehrsnetzwerk verbunden ist, das einen Server zum Steuern von Gewährung von Inbetriebnahmeanfragen, um dem Mesh-Netzwerk beizutreten, einschließt, wobei das Verfahren umfasst
Senden (702) einer Identität des Routerknotens und einer Identität des Vermittlungsknotens an den beitretenden Knoten;
Empfangen (703) einer Identität des beitretenden Knotens;
Erzeugen (704) eines paarweisen identitätsbasierten Schlüssels zwischen dem beitretenden Knoten und dem Vermittlungsknoten auf Basis der Identität des beitretenden Knotens und der Identität des Vermittlungsknotens;
Empfangen (705) eines Handshake-Signals zum Anfragen einer Genehmigung für den beitretenden Knoten, dem Mesh-Netzwerk beizutreten, und eines Authentifizierungstokens vom beitretenden Knoten;
Überprüfen (706), ob das Handshake-Signal und der Authentifizierungstoken auf Basis des paarweisen identitätsbasierten Schlüssels zwischen dem beitretenden Knoten und dem Vermittlungsknoten signiert sind; und
Weiterleiten (707) des Handshake-Signals und des Authentifizierungstokens auf Basis eines Ausgangs der Überprüfungseinheit an den Routerknoten.

13. Computerprogrammprodukt, das auf einem computerlesbaren Medium gespeichert ist, wobei das Computerprogramm Anweisungen umfasst, um ein Verarbeitungsgerät dazu zu bringen, das Verfahren nach einem der Ansprüche 10 bis 12 durchzuführen.

## Revendications

1. Appareil d'un nœud de routeur (3, 4) pour le routage de requêtes de mise en service, comprenant
une unité de réseau maillé (201) pour connecter le nœud de routeur à un réseau maillé comprenant un nœud de relais ;
une unité de réseau étendu (202) pour connecter le nœud de routeur à un réseau étendu incluant un serveur pour commander des requêtes d'octroi de mise en service pour rejoindre le réseau maillé,
une unité de réception (203) pour recevoir un signal de prise de contact pour demander de rejoindre le réseau maillé, un jeton d'authentification et une identité d'un nœud arrivant à partir d'un nœud de relais ;
une unité de génération de clé (204) pour générer une clé basée sur l'identité par paires entre le nœud arrivant et le nœud de routeur sur la base de l'identité du nœud arrivant et d'une identité du nœud de routeur ;
une unité de vérification (205) pour vérifier si le jeton d'authentification est valide sur la base au moins de la clé basée sur l'identité par paires ;
une unité de transmission (206) pour transmettre le signal de prise de contact au serveur sur le réseau étendu seulement si le jeton d'authentification est valide.

2. Appareil du nœud de routeur selon la revendication 1, dans lequel l'unité de vérification (205) est configurée pour comparer des informations authentifiées avec le jeton d'authentification à des entrées dans une liste noire et/ou des entrées dans une liste blanche si le jeton d'authentification est valide.

3. Appareil d'un nœud arrivant (1) pour la mise en service du nœud arrivant dans un réseau maillé (7) comprenant un nœud de relais (2) et un nœud de routeur (3, 4), dans lequel le nœud de routeur (3, 4) est connecté à un réseau étendu (5) incluant un serveur (6) pour commander des requêtes d'octroi de mise en service pour rejoindre le réseau maillé (7), l'appareil comprenant
une unité de réception (302) pour recevoir une identité du nœud de routeur à partir du nœud de relais ;
une unité de génération de clé (303) pour générer une clé basée sur l'identité par paires entre le nœud arrivant et le nœud de routeur sur la base d'une identité du nœud arrivant et d'une identité du nœud de routeur ;
une unité de prise de contact (304) pour générer un signal de prise de contact pour demander une permission de rejoindre le réseau maillé de la part du serveur ;
une unité de jeton d'authentification (305) pour calculer un jeton d'authentification sur la base de données d'authentification du nœud arrivant et de la clé basée sur l'identité par paires entre le nœud arrivant et le nœud de routeur ;
une unité d'envoi (306) pour envoyer le signal de prise de contact et le jeton d'authentification au nœud de relais.

4. Appareil du nœud arrivant selon la revendication 3,
dans lequel l'unité de génération de clé (303) est configurée en outre pour générer une clé basée sur l'identité par paires entre le nœud arrivant et le nœud de relais, sur la base de l'identité du nœud arrivant et d'une identité du nœud de relais ;
comprenant en outre une unité de signature (307) pour signer le signal de prise de contact et le jeton d'authentification sur la base de la clé basée sur l'identité par paires entre le nœud arrivant et le nœud de relais ; et
dans lequel l'unité d'envoi (306) est configurée pour envoyer le signal de prise de contact et le jeton d'authentification tels que signés par l'unité de signature au nœud de relais.

5. Appareil d'un nœud de relais (2) pour la mise en service d'un nœud arrivant (1) dans un réseau maillé (7) comprenant un nœud de relais (2) et un nœud de routeur (3, 4), dans lequel le nœud de routeur (3, 4) est connecté à un réseau étendu (5) incluant un serveur (6) pour commander des requêtes d'octroi de mise en service pour rejoindre le réseau maillé (7), l'appareil comprenant
une unité d'envoi (401) pour envoyer une identité du nœud de routeur et une identité du nœud de relais au nœud arrivant ;
une unité de réception d'identité (402) pour recevoir une identité du nœud arrivant ;
une unité de génération de clé (403) pour générer une clé basée sur l'identité par paires entre le nœud arrivant et le nœud de relais, sur la base de l'identité du nœud arrivant et d'une identité du nœud de relais ;
une unité réception de prise de contact (405) pour recevoir un signal de prise de contact pour demander une permission pour le nœud arrivant de rejoindre le réseau maillé et un jeton d'authentification à partir du nœud arrivant ;
une unité de vérification (404) pour vérifier si le signal de prise de contact et le jeton d'authentification sont signés sur la base de la clé basée sur l'identité par paires entre le nœud arrivant et le nœud de relais ;
une unité de transmission (406) pour transmettre le signal de prise de contact et le jeton d'authentification au nœud de routeur sur la base d'une sortie de l'unité de vérification.

6. Appareil selon une quelconque revendication précédente, dans lequel le jeton d'authentification est indicatif d'une preuve d'une identité du nœud arrivant (1).

7. Appareil selon une quelconque revendication précédente, dans lequel le nœud de routeur (3, 4) est un nœud de routeur de périphérie (4) du réseau maillé (7) qui est connecté directement au réseau étendu (7).

8. Appareil selon une quelconque revendication précédente, dans lequel le signal de prise de contact comprend un signal de prise de contact de sécurité de couche de transport de datagramme, DTLS.

9. Appareil selon une quelconque revendication précédente, dans lequel l'unité de génération de clé (204, 303, 403) est configurée pour générer la clé basée sur l'identité par paires entre le nœud arrivant (1) et le nœud de routeur (3, 4) et/ou la clé basée sur l'identité par paires entre le nœud arrivant (1) et le nœud de relais (2) sur la base d'un matériel de clé pré-distribuée basée sur l'identité.

10. Procédé d'un nœud de routeur pour le routage de requêtes de mise en service, comprenant
la connexion (502) du nœud de routeur à un réseau maillé comprenant un nœud de relais ;
la connexion (503) du nœud de routeur à un réseau étendu incluant un serveur pour commander des requêtes d'octroi de mise en service pour rejoindre le réseau maillé,
la réception (504) d'un signal de prise de contact pour demander de rejoindre le réseau maillé, d'un jeton d'authentification et d'une identité d'un nœud arrivant à partir d'un nœud de relais ;
la génération (505) d'une clé basée sur l'identité par paires entre le nœud arrivant et le nœud de routeur sur la base de l'identité du nœud arrivant et d'une identité du nœud de routeur ;
la vérification (506) si le jeton d'authentification est valide sur la base au moins de la clé basée sur l'identité par paires ; et
la transmission (507) du signal de prise de contact au serveur sur le réseau étendu seulement si le jeton d'authentification est valide.

11. Procédé d'un nœud arrivant pour la mise en service du nœud arrivant dans un réseau maillé comprenant un nœud de relais et un nœud de routeur, dans lequel le nœud de routeur est connecté à un réseau étendu incluant un serveur pour commander des requêtes d'octroi de mise en service pour rejoindre le réseau maillé, le procédé comprenant
la réception (601) d'une identité du nœud de routeur à partir du nœud de relais ;
la génération (602) d'une clé basée sur l'identité par paires entre le nœud arrivant et le nœud de routeur sur la base d'une identité du nœud arrivant et de l'identité du nœud de routeur ;
la génération (603) d'un signal de prise de contact pour demander une permission de rejoindre le réseau maillé de la part du serveur ;
le calcul (604) d'un jeton d'authentification sur la base de données d'authentification du nœud arrivant et le chiffrement du jeton d'authentification sur la base de la clé basée sur l'identité par paires entre le nœud arrivant et le nœud de routeur ; et
l'envoi (605) du signal de prise de contact et le jeton d'authentification au nœud de relais.

12. Procédé d'un nœud de relais pour la mise en service d'un nœud arrivant dans un réseau maillé comprenant le nœud de relais et un nœud de routeur, dans lequel le nœud de routeur est connecté à un réseau étendu incluant un serveur pour commander des requêtes d'octroi de mise en service pour rejoindre le réseau maillé, le procédé comprenant
l'envoi (702) d'une identité du nœud de routeur et une identité du nœud de relais au nœud arrivant ;
la réception (703) d'une identité du joint arrivant ;
la génération (704) d'une clé basée sur l'identité par paires entre le nœud arrivant et le nœud de relais, sur la base de l'identité du nœud arrivant et de l'identité du nœud de relais ;
la réception (705) d'un signal de prise de contact pour demander une permission pour le nœud arrivant de rejoindre le réseau maillé et d'un jeton d'authentification à partir du nœud arrivant ;
la vérification (706) si le signal de prise de contact et le jeton d'authentification sont signés sur la base de la clé basée sur l'identité par paires entre le nœud arrivant et le nœud de relais ; et
la transmission (707) du signal de prise de contact et du jeton d'authentification au nœud de routeur sur la base d'une sortie de l'unité de vérification.

13. Produit de programme informatique stocké sur un support lisible par ordinateur, le programme informatique comprenant des instructions pour amener un dispositif de traitement à réaliser le procédé selon l'une quelconque des revendications 10 à 12.
